# EUROPEAN PATENT APPLICATION

(11) **EP 3 991 878 A1**
(43) Date of publication of application: **04.05.2022**
(21) Application number: 20857820.3
(22) Date of filing: 05.08.2020
(51) Int. Cl.: B22F 3/105, B22F 3/16, B22F 9/08, B33Y 10/00, B33Y 30/00, B29C 64/153, B29C 64/205

(54) **RECOATER, LAYERED SHAPING DEVICE EQUIPPED THEREWITH, AND LAYERED SHAPING METHOD**

(30) Priority: 23.08.2019 JP 2019152744
(71) Applicant: KABUSHIKI KAISHA KOBE SEIKO SHO (KOBE STEEL, LTD.), Hyogo 651-8585 (JP)
(72) Inventor: HATSUDA Akimine, Hyogo 651-2271 (JP); YAMADA Takeshi, Hyogo 651-2271 (JP); KUROSAWA Eisuke, Hyogo 651-2271 (JP); MUKUDA Yu, Hyogo 651-2271 (JP)
(74) Representative: Müller-Boré & Partner Patentanwälte PartG mbB
(86) International application number: PCT/JP2020/030012
(87) International publication number: WO 2021/039327

(57) **Abstract**

A recoater of an additive manufacturing apparatus includes a powder retention section that defines a retention space in which a powder material is retained, and a slit part that has a slit inlet that receives the powder material retained and a slit outlet through which the powder material is discharged. The slit part includes a plate member fixed to the powder retention section by surface contact. A pair of slit inner wall surfaces that is connected to the slit outlet and faces each other is formed within a plate thickness of the plate member.

## Description

### TECHNICAL FIELD

The present invention relates to a recoater, additive manufacturing apparatus including the same, and additive manufacturing method.

### BACKGROUND ART

A method of dividing 3D CAD (Computer Aided Design) data into layers, and stacking layers along the divided layers to produce a 3D object is common as "Additive Manufacturing" technique. With this technique, complex shapes can be easily manufactured without using molds as long as 3D CAD data is available.

Examples of such additive manufacturing methods include a powder bed fusion (PBF) method in which spread powders of metal materials are selectively heated to fuse and solidify the powders or sinter the powders to form an additively manufactured object.

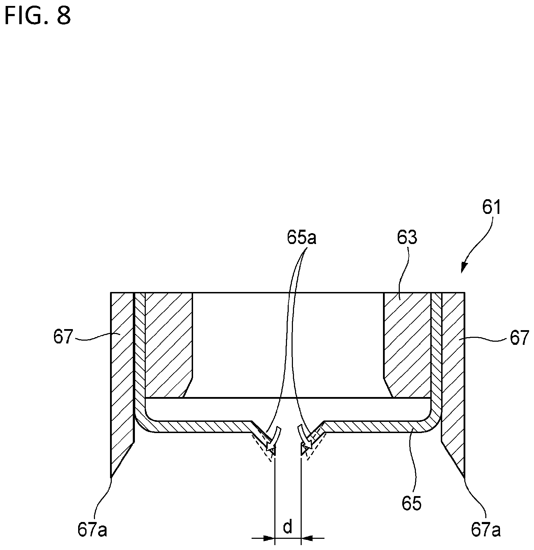

In a general powder bed fusion additive manufacturing apparatus, a recoater moves over the additive manufacturing section to form a thin layer of a powder material. As shown in FIG. 8 as one example of the recoater, the recoater includes a powder retention section 63 from which a powder material is supplied, a slit part 65 through which the powder material from the powder retention section 63 is supplied to the additive manufacturing section below the recoater 61, and a blade part 67 by which the powder material supplied to the additive manufacturing section is leveled smoothly. In many recoaters mounted on additive manufacturing apparatus distributed in the market, each of these parts is intricately fastened by many bolts and nuts or other fastening means, or at least one of the above parts is formed as an integrated body.

PLT 1 discloses an additive manufacturing apparatus based on the powder bed fusion method that produces 3D workpieces by irradiating a powder layer with laser beam. In the additive manufacturing apparatus in PLT 1, by a recoater (powder application device) including a powder retention section (powder chamber) that retains powder materials, the powder materials are applied to the additive manufacturing section (carrier) through the slit outlet (powder release port) of the slit part, and a surface of the applied powder materials is leveled smoothly by the blade part (flattening slider) included in the recoater.

### CITATION LIST

### PATENT LITERATURE

PLT 1: JP 2017-89006 A

### SUMMARY OF INVENTION

### TECHNICAL PROBLEM

In the recoater shown in FIG. 8, when the slit part 65 wears or when the slit outlet width d needs to be changed depending on a powder material used, the slit part 65 is replaced. At that time, only the slit part 65 itself cannot be replaced. In order to remove the slit part 65, other parts including the blade part 67 are needed to be disassembled, and this makes the work complicated. In addition, as for the blade part 67, in order to form a thin layer of the powder material on or above the additive manufacturing section, a gap between the blade tip 67a and the additively manufactured surface is maintained at a high dimensional accuracy of, for example, about 50 µm. Therefore, when the removed blade part 67 is remounted on the recoater 61, it is necessary to adjust the position of the blade part 67, and this makes the work of replacing the slit part 65 even more complicated.

In the recoater 61 shown in FIG. 8, the slit part 65 is formed by bending a sheet metal, and there is a limit on manufacturing with high dimensional accuracy of the bending angle of the slit outlet tip 65a and the slit outlet width d. In addition, the shape of the slit outlet is easily changed by flexure of the sheet metal, making it difficult to accurately control the amount of the powder material supplied through the slit outlet.

Therefore, in a case where a thin layer of the powder material is formed by the blade part 67, the amount of the powder material supplied to a space between a pair of blade parts 67 varies, and the pressure that the powder material receives from the blade part during movement of the blade parts varies. As a result, the density and thickness of the thin layer formed are not uniform, and the shape accuracy of the additively manufactured object is reduced.

In the recoater in PLT 1, the blade part can be removed, but the slit part itself cannot be removed because the slit part and the powder retention section are integrally configured.

Therefore, an object of the present invention is to provide a recoater in which the slit part can be easily replaced or adjusted without complicated work, an additive manufacturing apparatus including the recoater, and an additive manufacturing method.

### SOLUTION TO PROBLEM

The present invention includes the following configurations.
(1) A recoater that is to be used in an additive manufacturing apparatus based on a powder bed fusion method in which a powder material laid on or above an additive manufacturing section is selectively fused to form a fused body and the fused body is sequentially stacked, and moves over the additive manufacturing section to form a layer of the powder material on or above the additive manufacturing section,
   the recoater comprising:
      a powder retention section that defines a retention space in which the powder material is retained; and
      a slit part that is provided on the powder retention section and has a slit inlet that receives the powder material retained and a slit outlet through which the powder material is discharged,
      wherein the slit part includes a plate member fixed to the powder retention section by surface contact, and
      a pair of slit inner wall surfaces that is connected to the slit outlet and faces each other is formed within a plate thickness of the plate member.
(2) An additive manufacturing apparatus comprising the recoater according to (1).
(3) An additive manufacturing method comprising selectively fusing a powder material laid on or above an additive manufacturing section to form a fused body, and sequentially stacking the fused body,
   the additive manufacturing method comprising moving the recoater according to (1) over the additive manufacturing section to form a layer of the powder material on or above the additive manufacturing section.

### ADVANTAGEOUS EFFECTS OF INVENTION

In the present invention, a slit part can be easily replaced or adjusted without complicated work.

### BRIEF DESCRIPTION OF DRAWINGS

FIG. 1 shows a schematic configuration view of a powder additive manufacturing apparatus.
FIG. 2 shows a schematic cross-sectional view of a main part of a recoater.
FIG. 3 shows a cross-sectional view of the recoater, taken along a line III-III in FIG. 2.
(A) of FIG. 4 shows a plan view of a slit part viewed from the top, and (B) of FIG. 4 shows a cross-sectional view of the recoater, taken along a line IV-IV in (A) of FIG. 4.
(A) of FIG. 5 shows an exploded view of the recoater, and (B) of FIG. 5 shows an assembled view of the recoater.
(A) to (D) of FIG. 6 show a process diagram of each additive manufacturing process in order.
(A) to (C) of FIG. 7 show a process diagram of each additive manufacturing process in order.
FIG. 8 shows a schematic cross-sectional view of a main part of a conventional recoater.

### DESCRIPTION OF EMBODIMENTS

Hereinbelow, embodiments of the present invention are described in detail with reference to the drawings.

### <Configuration of powder additive manufacturing apparatus>

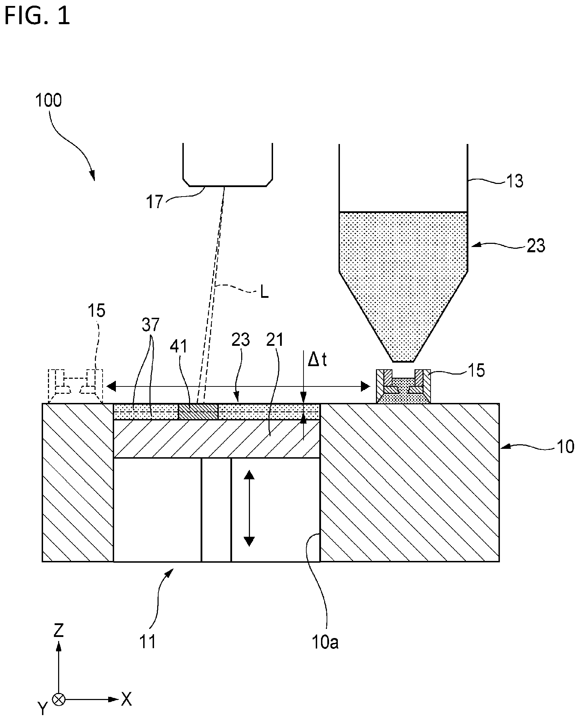

FIG. 1 shows a schematic configuration view of a powder additive manufacturing apparatus.

A powder additive manufacturing apparatus 100 which is one of additive manufacturing apparatuses includes an additive manufacturing section 11 provided in a housing 10, a powder pod 13, a recoater 15, and an optical scanning section 17.

The additive manufacturing section 11 includes a base plate 21 that is freely elevated and lowered in a slide hole 10a formed in the housing 10. The base plate 21 is elevated and lowered in the slide hole 10a by a vertical drive mechanism (not shown). The base plate 21 is rectangular in plan view from above the housing 10, and its top surface is flat.

The powder pod 13 is located above the housing 10 and stores a powder material 23. The powder pod 13 also has a nozzle (not shown) that discharges the powder material 23 downward.

The recoater 15 is placed on the housing 10 and can be moved horizontally in the area including the area between the space below the powder pod 13 and the additive manufacturing section 11 by the horizontal drive mechanism (not shown). The recoater 15 is an elongated shape that extends in a direction intersecting with the horizontal movement direction (depth direction in FIG. 1), and is formed with a depth length such that an entire surface of the base plate 21 can be scanned by horizontal movement.

In this description, the vertical direction shown in FIG. 1 is defined as Z direction, the movement direction of the recoater 15 is defined as X direction, and the depth direction perpendicular to the X direction and Z direction is defined as Y direction. The movement direction of the recoater 15 is not necessarily limited to the horizontal direction, and can be set appropriately depending on the structure or the like of the powder additive manufacturing apparatus 100.

The optical scanning section 17 emits laser beam L toward the additive manufacturing section 11 based on the input 3D profile data. The laser beam L is a heat source for fusion of the powder material 23, and the powder material 23 within an area irradiated with the laser beam L is selectively fused to form a fused body 41. By sequentially staking the fused bodies 41, an additively manufactured object is obtained.

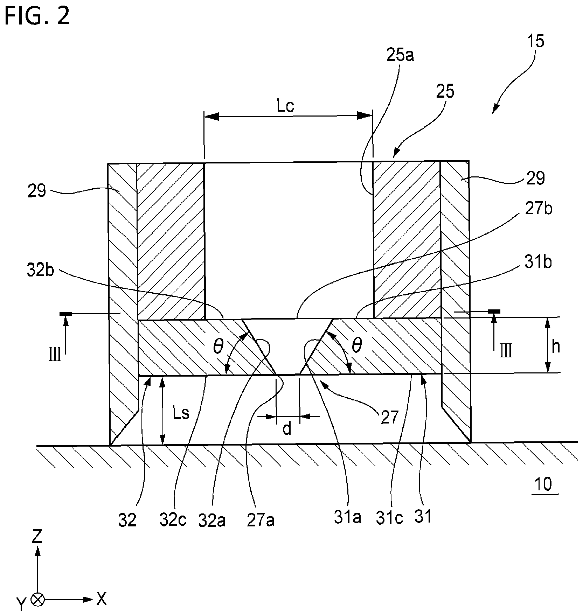

FIG. 2 shows a schematic cross-sectional view of a main part of the recoater 15.

The recoater 15 includes a powder retention section 25 that defines a retention space in which the powder material 23 is retained, a slit part 27 provided at the bottom of the retention space, and a blade part 29. The slit part 27 extends in the direction (Y direction) that intersects with the movement direction (X direction) of the recoater 15, and a slit outlet 27a is formed therein for discharging the powder material 23 downward (Z direction). In this slit part 27, an opening that is provided at a position that faces the slit outlet 27a in the Z direction, and receives the powder material 23 from the powder retention section 25 is defined as a slit inlet 27b.

The blade parts 29 are mounted on both surfaces of the powder retention section 25 and the slit part 27 in the X direction, and the powder material 23 on or above the additive manufacturing section 11 is smoothened by moving the recoater 15. The blade part 29 is a plate member with a sharp corner at its tip, and the mounting surface to the powder retention section 25 is a flat surface, but its shape is in any shape. The recoater 15 may be configured such that the blade part 29 is provided on only one side of the recoater 15 in the X direction.

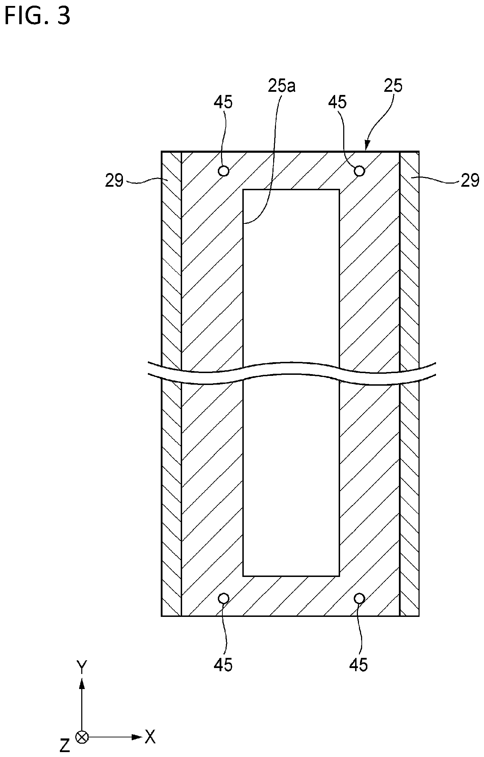

FIG. 3 shows a cross-sectional view of the recoater, taken along a line III-III in FIG. 2.

The powder retention section 25 is formed along the Y direction of the recoater 15, and the powder retention space is defined inside the inner wall surfaces 25a. The powder retention section 25 may be a single structure in which the inner wall surface 25a is formed continuously from one end to the other end in the Y direction of the recoater 15, or may be a structure in which the inner wall surface 25a is divided every predetermined length to define a plurality of retention spaces, and the plurality of retention spaces are arranged in a row.

The slit part 27 shown in FIG. 2 includes a pair of bottom plates 31 and 32 at the bottom of the powder retention section 25 (the bottom of the retention space). The pair of bottom plates 31 and 32 are plate members arranged parallel to each other and form a slit between a pair of the side surfaces facing each other (here, the bottom plates 31 and 32 are also referred to as slit plates). The side surfaces facing each other in the bottom plates 31 and 32 are the slit inner wall surfaces 31a and 32a, and these slit inner wall surfaces 31a and 32a are formed within a plate thickness of the bottom plate 31. At least one of the slit inner wall surfaces (both slit inner wall surfaces in this configuration) is an inclined surface that is inclined from the thickness direction (Z direction). The gap between the slit inner wall surfaces 31a and 32a in the X direction becomes narrower toward the slit outlet 27a. In other words, the slit inner wall surfaces 31a and 32a are arranged across a gap that tapers downward. The slit inlet 27b, which is an opening for receiving the powder material 23, is formed at a position facing the slit outlet 27a. As a result, the powder material supplied through the slit inlet 27b moves along the pair of slit inner wall surfaces 31a and 32a facing each other, and is supplied to the slit outlet 27a.

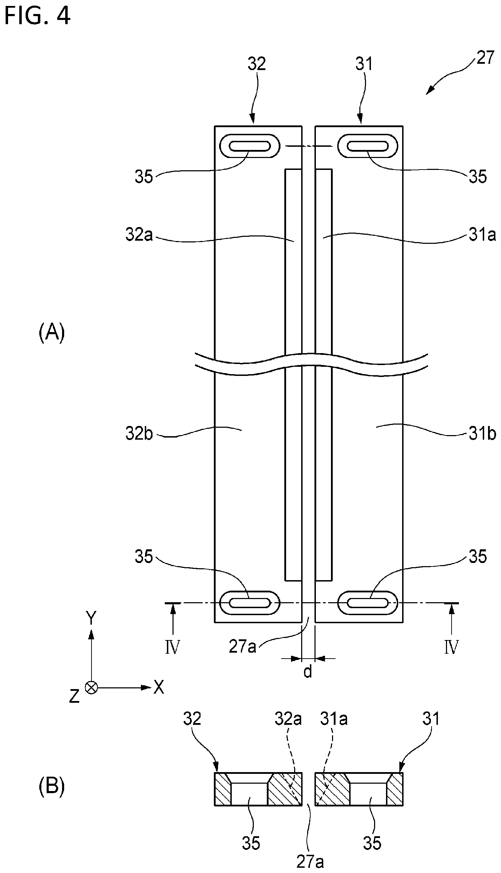

(A) of FIG. 4 shows a plan view of the slit part 27 viewed from the top, and (B) of FIG. 4 shows a cross-sectional view of the slit part 27, taken along a line IV-IV in (A) of FIG. 4.

The slit part 27 includes a pair of bottom plates 31 and 32. The top surfaces 31b and 32b in the thickness direction (Z direction) of the bottom plates 31 and 32 are flat. The bottom plates 31 and 32 each has mounting holes 35 for mounting on the powder retention section 25 at both ends in the longitudinal direction (Y direction). The mounting holes 35 are long holes extending in the X direction (the short direction of the bottom plates 31 and 32).

The slit part 27 and the blade part 29 described above are mounted on the powder retention section 25 individually and removably by fastening members.

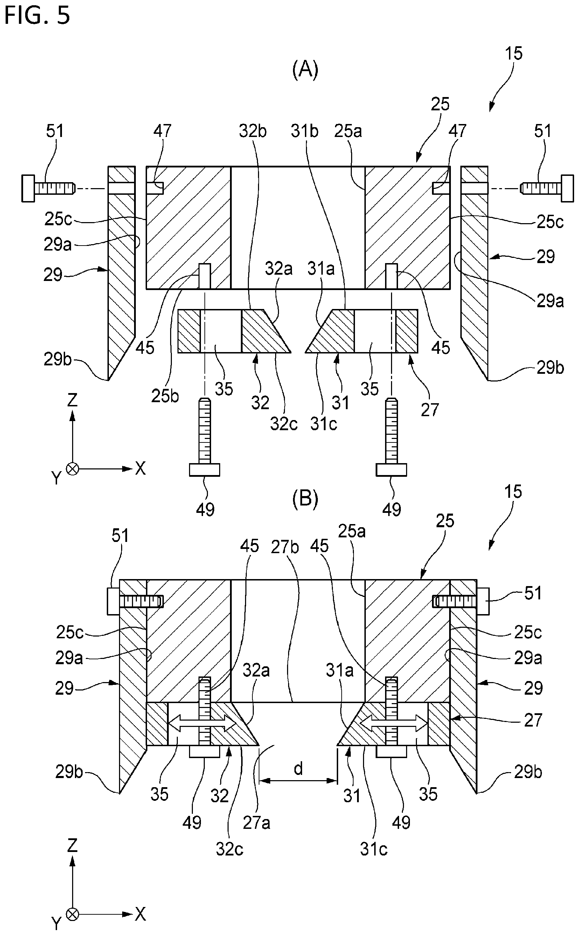

(A) of FIG. 5 shows an exploded view of the recoater 15, and (B) of FIG. 5 shows an assembled view of the recoater 15.

As shown in (A) of FIG. 5, the powder retention section 25 has a flat bottom surface 25b and flat side surfaces 25c at both ends in the X direction. On the bottom surface 25b, bolt holes 45 for fixing the bottom plates 31 and 32 are formed, and a pair of the side surfaces 25c each has bolt hole 47 for fixing the blade part 29.

As shown in (B) of FIG. 5, the bottom plates 31 and 32 are fastened to the powder retention section 25 by bolts 49 which are fastening members in a state that the bottom surface 25b of the powder retention section 25 and the top surfaces 31b and 32b of the bottom plates 31 and 32 are surface-contact with each other. The width of the mounting hole 35 in the Y direction is smaller than the head of the bolt 49, and the head of the bolt 49 is brought into contact with the bottom surfaces 31c and 32c of the bottom plates 31 and 32 to fix the bottom plates 31 and 32 to the powder retention section 25. The position of the bottom plates 31 and 32 in the X direction is adjustable within the movable range of the bolts 49 for the mounting holes 35. In other words, the powder retention section 25 and the bottom plates 31 and 32 have flat surfaces that are surface-contact with each other, and they can be relatively moved along the flat surfaces (i.e., in parallel), and the fixed positions can be changed.

The blade part 29 is fastened to the powder retention section 25 by a bolt 51 which is a fastening member in a state that the flat mounting surface 29a and the flat side surface 25c of the powder retention section 25 are surface-contact with each other.

The mounting position of the slit part 27 to the powder retention section 25 is different from the mounting position of the blade part 29, and the mounting direction of the slit part 27 to the powder retention section 25 is perpendicular to the mounting direction of the blade part 29. In other words, the slit part 27 is mounted on the bottom surface 25b of the powder retention section 25 in the Z direction, and the blade part 29 is mounted on the side surface 25c of the powder retention section 25 in the X direction. For this reason, the movement line of the slit part 27 when the slit part 27 is mounted on the powder retention section 25 and the movement line of the blade part 29 when the blade part 29 is mounted on the powder retention section 25 do not cross each other. Therefore, the slit part 27 and the blade part 29 do not interfere with each other when they are mounted on or removed from the powder retention section 25, and the slit part 27 and the blade part 29 can be mounted on or removed from the powder retention section 25 independently. In this way, by mounting the slit part 27 and the blade part 29 on the outer surfaces of the powder retention section 25, the outer surfaces having different normal directions from each other, the replacement work of the slit part 27 and blade part 29 is not complicated, and the replacement work can be done in a short time.

Here, as shown in FIG. 2, the retention section width between the inner wall surfaces 25 facing each other in the X direction at the position where the powder retention section is connected to the slit part 27 is defined as Lc, the width of the slit outlet 27a in the X direction (slit outlet width) is defined as d, and the acute angle formed by the slit inner wall surface 31a and the bottom surface 31c of the bottom plate 31 is defined as slit inclination angle θ (in this configuration, the slit inner wall surface 32a also has the same slit inclination angle θ). The slit outlet width d and the slit inclination angle θ are constant along the Y direction of the recoater 15.

The above retention section width Lc, slit outlet width d, and slit inclination angle θ function as parameters to control the amount of the powder material supplied to the space between the pair of blade parts 29 on the lower side of the recoater 15. It is found that, when each parameter varies from the specified value, the amount of the powder material supplied changes in accordance with this variation, which affects the density, thickness or the like of the layer (thin layer 37) of the powder material 23 to be formed (see FIG. 1).

### <Additive manufacturing processes by powder additive manufacturing apparatus>

Next, additive manufacturing processes by the power additive manufacturing apparatus 100 having the above configuration is described.

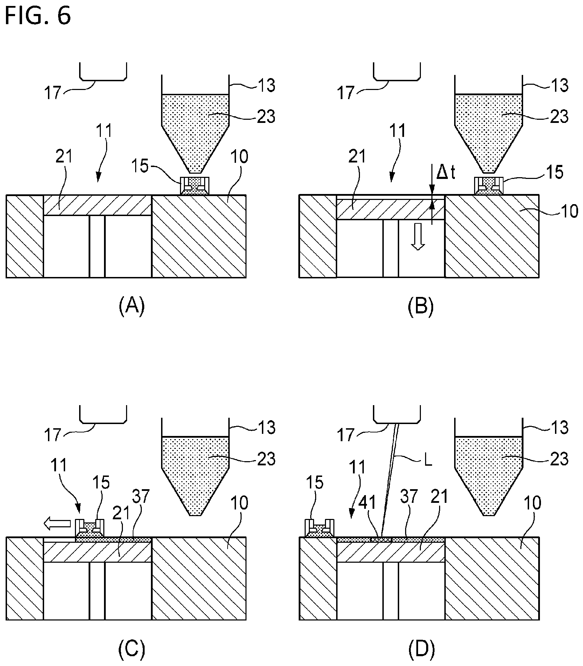

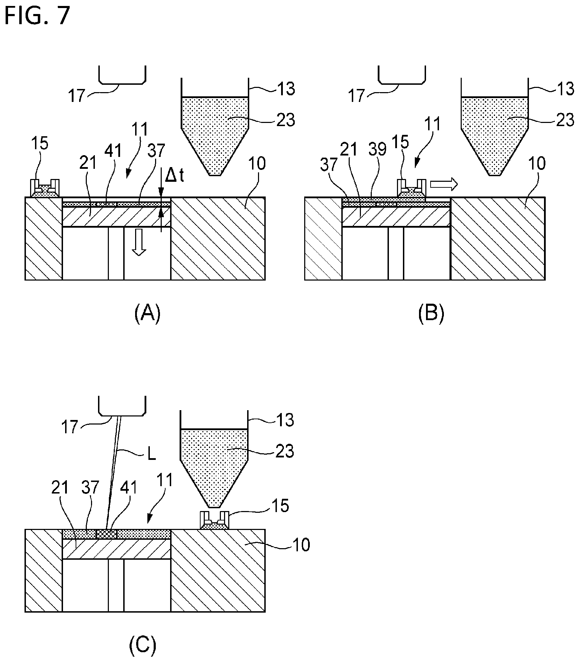

(A) to (D) of FIG. 6 and (A) to (C) of FIG. 7 show a process diagram of each additive manufacturing process in order. The operation of each process described below is performed by commands from a control unit (not shown) being a computer device including a CPU, memory, storage, and the like.

First, as shown in (A) of FIG. 6, the recoater 15 is placed below the powder pod 13, and a predetermined amount of the powder material 23 is supplied from the powder pod 13 to the powder retention section 25 (see FIG. 2) of the recoater 15.

Next, as shown in (B) of FIG. 6, the base plate 21 is lowered by Δt to form a step with thickness Δt between the top surface of the housing 10 and the top surface of the base plate 21. Then, as shown in (C) of FIG. 6, the recoater 15 is moved from the position below the powder pod 13 toward the additive manufacturing section 11. As a result, the powder material 23 flows down from the slit outlet 27a in the recoater 15, and a thin layer 37 of the powder material 23 is laid on the base plate 21.

Then, as shown in (D) of FIG. 6, the optical scanning section 17 emits laser beam L toward the thin layer 37 laid on the base plate 21. The thin layer 37 at predetermined positions is selectively irradiated with the laser beam L based on 3D profile data of the target shape. In the area irradiated with the laser beam L, the thin layer 37 of the powder material fuses to form a fused body 41 for one layer.

Furthermore, as shown in (A) of FIG. 7, the base plate 21 is further lowered by Δt to form a step with thickness Δt between the top surface of the housing 10 and the thin layer 37 on the base plate 21. Then, as shown in (B) of FIG. 7, the recoater 15 is moved from the moved position to the powder pod 13 side, and a thin layer 39 of the powder material 23 is formed on the thin layer 37 in the step. Then, as shown in (C) of FIG. 7, the optical scanning section 17 emits the laser beam L toward the formed thin layer 39 based on the 3D profile data.

By repeating the above process of laying down the powder material 23 and emitting the laser beam L, and sequentially stacking the fused bodies 41 in the additive manufacturing section 11, an additively manufactured object with a shape in accordance with the 3D profile data can be obtained.

In the powder additive manufacturing apparatus having the configuration described above, the slit inner wall surfaces 31a and 32a provided in the slit part 27 of the recoater 15 are formed within the plate thickness of the bottom plates 31 and 32, which are plate members. In addition, the bottom plates 31 and 32 are fixed to the powder retention section in a state that the powder retention section 25 and the bottom plates 31 and 32 are surface-contact with each other, and as a result, the bottom plates 31 and 32 can be accurately positioned with respect to the powder retention section 25 as a reference, and the slit inclination angle θ and the slit outlet width d for the slit inner wall surfaces 31a and 32a can be set to the desired state. In addition, as compared with slits formed by bending a sheet metal, the slit inner wall surfaces 31a and 32a formed within the plate thickness can always be maintained in a precisely constant shape without deformation. Therefore, various parameters such as the slit outlet width d and slit inclination angle θ are always constant, and a thin layer of the powder material can be formed with uniform density and thickness. As a result, additive manufacturing can be performed with high accuracy.

When the slit part wears, the kind of the powder material is changed, or the additive manufacturing conditions such as the movement speed of the recoater are changed, the slit part can be easily replaced with an appropriate slit part without complicated work because the slit part itself is removable without interfering with other parts.

As for the slit outlet width d, in this configuration, a pair of slit inner wall surfaces 31a and 32a are formed by separate bottom plates 31 and 32, respectively. Therefore, as compared with the case where a pair of inner wall surfaces are formed in a single bottom plate, the slit outlet width d can be easily changed by simply changing the distance between the bottom plates 31 and 32, and the work to change the slit outlet width d to the desired slit outlet width d is not complicated. In addition, it is no longer necessary to prepare bottom plates having various slit outlet width d in advance, and equipment costs can be reduced. Thus, in this configuration, the slit part can be replaced and adjusted quickly with simple work.

In addition, the slit part 27 in this configuration enables stable supply of the powder material regardless of the manufacturing method of the powder material to be used. For example, the shape of individual grains of powder materials manufactured by a water atomization method tend to be more irregular than that of powder materials manufactured by a gas atomization method. Therefore, during flowing of the powder material, clogging at the slit part easily occurs by the unevenness of the surface of the powder being intertwined with each other, reduction in flowability of the powder material due to static electricity between the powders, or the like. However, in the slit part 27 in this configuration, the various parameters for the slit shape are always maintained at a constant level, and the flow of the powder material is controlled more accurately than the case of a slit part formed by processing a sheet metal. Therefore, even when powder materials with slightly different flowability are used or the flowability of the powder materials varies slightly, the difference in flowability up to the limit that causes clogging is ensured, and as a result, occurrence of clogging can be prevented.

The present invention is not limited to the above embodiments, and mutual combination of each configuration in the embodiments, and changes or applications by those skilled in the art based on the description and common techniques, are also contemplated in the present invention and are included in the scope of protection sought.

For example, the slit part of the recoater is made of a pair of bottom plates in the embodiment, but the slit part may also be made of a single bottom plate with an opening in which a pair of slit inner wall surfaces is formed on the inner side of the opening.

The pair of slit inner wall surfaces may be formed with one slit inner wall surface being inclined from the thickness direction and the other slit inner wall surface being along the thickness direction, and the slit inclination angle of one slit inner wall surface may be different from that of the other slit inner wall surface. Furthermore, the slit inclination angle of the slit inner wall surface is not limited to being constant along the longitudinal direction (Y direction) of the slit part, and may vary along the Y direction.

In the above configuration, the slit part 27 is formed by a pair of bottom plates 31 and 32, and the fixing position of each of the bottom plates 31 and 32 can be adjusted in the X direction. However, the fixing position of only one of the bottom plates can be adjusted in the X direction, and the other bottom plate may be fixed to the powder retention section 25 in a non-movable manner. In this case, the structure can be simplified while simplifying the adjustment of the slit part 27.

As described above, the present description discloses the followings.
(1) A recoater that is to be used in an additive manufacturing apparatus based on a powder bed fusion method in which a powder material laid on or above an additive manufacturing section is selectively fused to form a fused body and the fused body is sequentially stacked, and moves over the additive manufacturing section to form a layer of the powder material on or above the additive manufacturing section,
   the recoater comprising:
   a powder retention section that defines a retention space in which the powder material is retained; and
   a slit part that is provided on the powder retention section and has a slit inlet that receives the powder material retained and a slit outlet through which the powder material is discharged,
   wherein the slit part includes a plate member fixed to the powder retention section by surface contact, and
   a pair of slit inner wall surfaces that is connected to the slit outlet and faces each other is formed within a plate thickness of the plate member.

In this recoater, since the slit inner wall surface is formed within the plate thickness of the plate member that is fixed to the powder retention section by surface contact, the inclination of the slit inner wall surface and the width of the slit outlet can always be accurately maintained at a constant level. Therefore, as compared with slits formed by bending a sheet metal, the slit shape can be accurately maintained at a constant level, and a layer of the powder material can be formed with uniform density and thickness. Therefore, reduction in shape accuracy of the additively manufactured object can be prevented.

(2) The recoater according to (1), wherein the plate member is configured by including a pair of slit plates arranged in parallel with in a state where side surfaces of the slit plates face each other, and the slit inner wall surfaces are formed by the side surfaces of the slit plates facing each other.

In this recoater, since the slit inner wall surfaces are formed by the side surfaces of the pair of slit plates, the width of the slit outlet can be changed by changing the distance between the slit plates.

(3) The recoater according to (1) or (2), wherein each of the powder retention section and the plate member has a flat surface that is in surface contact with each other, and a position where the powder retention section and the plate member are fixed to each other is changeable through parallel relative movement of the flat surfaces.

In this recoater, the powder retention section and the plate member are relatively moved on their flat surfaces and fixed to each other, and as a result, the width of the slit outlet can be easily changed while maintaining the inclination of the slit inner wall surface.

(4) The recoater according to any one of (1) to (3), comprising a blade part that is fixed to at least one side surface of the powder retention section in a moving direction of the recoater and levels the powder material supplied to the additive manufacturing section from the slit part along movement of the recoater,
wherein the slit part is removably mounted on the powder retention section along a direction of not interfering with the blade part, the direction being different from a direction of mounting the blade part on the powder retention section.

In this recoater, when the slit part is mounted on or removed from the powder retention section, the slit part and the blade part do not interfere with each other, and as a result, the slit part can be mounted on or removed from the powder retention section independently from the blade part. In addition, when the blade part is replaced, the blade part and the slit part do not interfere with each other, and as a result, the replacement work of each of the slit part and blade part is not complicated, and the replacement work of the slit part and the blade part can be done in a short time.

(5) An additive manufacturing apparatus comprising the recoater according to any one of (1) to (4).

In this additive manufacturing apparatus, by using the recoater that can maintain the slit shape in a precisely constant manner, a layer of the powder material can be formed with uniform density and thickness, and reduction in shape accuracy of the additively manufactured object can be prevented.

(6) An additive manufacturing method comprising selectively fusing a powder material laid on or above an additive manufacturing section to form a fused body, and sequentially stacking the fused body,
the additive manufacturing method comprising moving the recoater according to any one of (1) to (4) over the additive manufacturing section to form a layer of the powder material on or above the additive manufacturing section.

In this additive manufacturing method, since the slit inner wall surface is formed within the plate thickness of the plate member that is fixed to the powder retention section by surface contact, inclination of the slit inner wall surface and the width of the slit outlet can always be accurately maintained at a constant level. Therefore, as compared with slits formed by bending a sheet metal, the slit shape can be accurately maintained at a constant level, and a layer of the powder material can be formed with uniform density and thickness. Therefore, reduction in shape accuracy of the additively manufactured object can be prevented.

(7) The additive manufacturing method according to (6), wherein a powder manufactured by a water atomization method is used as the powder material.

In this additive manufacturing method, even when the powder manufactured by a water atomization method that likely causes low flowability and clogging at the slit part is used, the shape of the slit part can be maintained constant, and flow of the powder material is controlled accurately. As a result, even when powder materials with slightly different flowability are used, occurrence of clogging at the slit part can be prevented.

This application is based on Japanese patent application No. 2019-152744 filed on August 23, 2019, the contents of which are incorporated herein by reference.

### REFERENCE SIGNS LIST

- 10: Housing
- 11: Additive manufacturing section
- 13: Powder pod
- 15: Recoater
- 17: Optical scanning section
- 21: Baseplate
- 23: Powder material
- 25: Powder retention section
- 25b: Bottom surface (flat surface)
- 27: Slit part
- 27a: Slit outlet
- 27b: Slit inlet
- 29: Blade part
- 29a: Mounting surface
- 29b: Blade tip
- 31, 32: Bottom plate (Slit plate, plate member)
- 31a, 32a: Slit inner wall surface
- 31b, 32b: Top surface (flat surface)
- 31c, 32c: Bottom surface
- 35: Mounting hole
- 37, 39: Thin layer (layer)
- 41: Fused body
- 45, 47: Bolt hole
- 49, 51: Bolt
- 100: Powder additive manufacturing apparatus

## Claims

1. A recoater that is to be used in an additive manufacturing apparatus based on a powder bed fusion method in which a powder material laid on or above an additive manufacturing section is selectively fused to form a fused body and the fused body is sequentially stacked, and moves over the additive manufacturing section to form a layer of the powder material on or above the additive manufacturing section,
the recoater comprising:
a powder retention section that defines a retention space in which the powder material is retained; and
a slit part that is provided on the powder retention section and has a slit inlet that receives the powder material retained and a slit outlet through which the powder material is discharged,
wherein the slit part includes a plate member fixed to the powder retention section by surface contact, and
a pair of slit inner wall surfaces that is connected to the slit outlet and faces each other is formed within a plate thickness of the plate member.

2. The recoater according to claim 1, wherein the plate member is configured by including a pair of slit plates arranged in parallel in a state where side surfaces of the slit plates face each other, and the slit inner wall surfaces are formed by the side surfaces of the slit plates facing each other.

3. The recoater according to claim 1, wherein each of the powder retention section and the plate member has a flat surface that is in surface contact with each other, and a position where the powder retention section and the plate member are fixed to each other is changeable through parallel relative movement of the flat surfaces.

4. The recoater according to claim 2, wherein each of the powder retention section and the plate member has a flat surface that is in surface contact with each other, and a position where the powder retention section and the plate member are fixed to each other is changeable through parallel relative movement of the flat surfaces.

5. The recoater according to any one of claims 1 to 4, comprising a blade part that is fixed to at least one side surface of the powder retention section in a moving direction of the recoater and levels the powder material supplied to the additive manufacturing section from the slit part along movement of the recoater,
wherein the slit part is removably mounted on the powder retention section along a direction of not interfering with the blade part, the direction being different from a direction of mounting the blade part on the powder retention section.

6. An additive manufacturing apparatus comprising the recoater according to any one of claims 1 to 4.

7. An additive manufacturing apparatus comprising the recoater according to claim 5.

8. An additive manufacturing method comprising selectively fusing a powder material laid on or above an additive manufacturing section to form a fused body, and sequentially stacking the fused body,
the additive manufacturing method comprising moving the recoater according to any one of claims 1 to 4 over the additive manufacturing section to form a layer of the powder material on or above the additive manufacturing section.

9. An additive manufacturing method comprising selectively fusing a powder material laid on or above an additive manufacturing section to form a fused body, and sequentially stacking the fused body,
the additive manufacturing method comprising moving the recoater according to claim 5 over the additive manufacturing section to form a layer of the powder material on or above the additive manufacturing section.

10. The additive manufacturing method according to claim 8, wherein a powder manufactured by a water atomization method is used as the powder material.

11. The additive manufacturing method according to claim 9, wherein a powder manufactured by a water atomization method is used as the powder material.
